# EUROPÄISCHE PATENTSCHRIFT

(11) **EP 3 061 182 B1**
(45) Veröffentlichungstag und Bekanntmachung des Hinweises auf die Patenterteilung: **13.06.2018**
(21) Anmeldenummer: 14783808.0
(22) Anmeldetag: 09.10.2014
(51) Int. Cl.: H02P 29/00, H02M 1/44, H02M 7/5395

(54) **VERFAHREN ZUR ANSTEUERUNG EINES BÜRSTENLOSEN MOTORS**
METHOD FOR CONTROLLING A BRUSHLESS MOTOR
PROCÉDÉ PERMETTANT DE COMMANDER UN MOTEUR SANS BALAIS

(30) Priorität: 22.10.2013 DE 102013221433
(43) Veröffentlichungstag der Anmeldung: 31.08.2016
(73) Patentinhaber: Continental Teves AG & Co. OHG, 60488 Frankfurt (DE)
(72) Erfinder: STAUDER, Peter, 55128 Mainz (DE); ÖSTREICH, Christian, 63584 Gründau (DE); KAUFMANN, Tom, 55566 Ippenschied (DE); NETZ, Achim, 63100 Rodgau (DE)
(86) Internationale Anmeldenummer: PCT/EP2014/071657
(87) Internationale Veröffentlichungsnummer: WO 2015/058969

(56) Entgegenhaltungen:
- EP-A2- 1 596 491
- EP-A2- 2 634 906
- WO-A2-2013/079198
- DE-T5- 10 393 516

## Beschreibung

Die Erfindung betrifft ein Verfahren gemäß Anspruch 1 und eine Ansteuerschaltung gemäß Anspruch 8 sowie deren Verwendung.

Elektronisch kommutierte permanenterregte Synchronmaschinen, auch als bürstenlose Motoren bekannt, weisen einen Stator mit mindestens zwei, insbesondere drei, Phasenwicklungen und einen Rotor mit mindestens einem senkrecht zur Drehachse angeordneten Polpaar auf, welches durch einen oder mehrere in oder auf dem Rotor angeordnete Permanentmagnete gebildet wird. Ein bürstenloser Motor wird über eine Ansteuerschaltung mit Strom versorgt, bei der jeder Phasenwicklung ein oberer und ein unterer Schalter zugeordnet sind, welche diese mit einer oberen bzw. einer unteren Versorgungsspannung beaufschlagen können. Wenn eine oder mehrere Phasenwicklungen bestromt werden, so richtet sich der Rotor im entstehenden Magnetfeld aus. Für eine gezielte Ansteuerung muss die Rotorposition ermittelt werden, was beispielsweise mittels eines Resolvers oder Drehencoders erfolgt.

Zweckmäßigerweise kann eine Regelung der Ströme durch die Phasenwicklungen in einem rotorfesten Koordinatensystem erfolgen, wobei eine d-Achse in Richtung des Rotormagnetfelds und eine um 90° (elektrischer Winkel, über die Polpaarzahl mit dem mechanischen Winkel verknüpft) zu dieser stehenden q-Achse betrachtet werden. Ein in q-Achsen-Richtung fließender Strom bestimmt (in einem Motor ohne Reluktanzmoment) das abgegebene Drehmoment und wird daher als drehmomentbildender Strom (i_{q}) bezeichnet. Zur Erzielung hoher Drehzahlen kann eine Feldschwächungsregelung erfolgen, in der auch ein in d-Achsen-Richtung fließender Strom vorgegeben wird. Das rotorfeste Koordinatensystem rotiert gegenüber dem Stator, daher werden über eine geeignete Transformation anhand der Rotorposition die anzulegenden Phasenströme bzw. entsprechende Phasenspannungen ermittelt. Auch über alternative Verfahren wie z.B. eine Steuerung mit Hilfe von in einer Tabelle abgelegten Werten können Phasenspannungen vorgegeben werden. Gemäß der ermittelten Phasenspannungen werden in einer Pulsweitenmodulation (PWM), wie insbesondere einer Raumzeigermodulation, periodisch Ansteuerungsgrade sowie diesen entsprechende Zeitdauern ermittelt, während denen die jeweilige Phasenwicklung durch die Ansteuerschaltung mit der oberen oder der Versorgungsspannung verbunden werden.

Schalteffekte im Umrichter der Ansteuerschaltung sind eine maßgebliche Quelle für leitungsgebundene Störungen, welche über das Bordnetz Fehlfunktionen in elektronischen Schaltungen hervorrufen können. Durch das Schalten der die Phasenwicklungen ansteuernden Leistungshalbleiter werden sowohl Störungen im Bereich der Schaltfrequenz als auch deren Oberwellen bei Vielfachen der Schaltfrequenz erzeugt. Im Sinne der elektromagnetischen Verträglichkeit (EMV) ist es gerade bei Elektromotoren als Verbrauchern mit verhältnismäßig hoher elektrischer Leistung wichtig, die Abgabe von Störimpulsen zu minimieren. Aus diesem Grund wird häufig eine mittenzentrierte, mehrphasige PWM durchgeführt, die gegenüber einer flankenzentrierten PWM ein breiteres Frequenzspektrum ergibt, da die Ein- und Ausschaltflanken bei drehendem Motor bezüglich des durch die PWM-Basisfrequenz gegebenen festen Zeitrasters ständig verändert werden. Das zugehörige Frequenzspektrum der abgegebenen Störimpulse wird dadurch verschliffen und die gemittelten Amplitudenwerte von Schaltfrequenz und Oberwellen werden deshalb kleiner.

In EP 2 634 906 A2 wird eine Vorrichtung mit einem Umrichter und einer Antriebssteuerung vorgestellt, wobei der Umrichter für jede Phase mehrere Schaltelemente aufweist. Die Antriebssteuerung kann einen Kurzschlussmodus in einer Phase ausführen, welche diese Phase spannungsfrei schaltet.

Die DE 103 93 516 T5 betrifft ein Antriebsverfahren für einen Motor, welches durch eine Raumvektor-PWM Modulation geregelt wird. Die DE 103 93 516 T5 schlägt eine Algorithmusstruktur für die Implementierung eines entsprechenden Raumvektor-PWM-Schemas vor. Dabei kann ein Nullvektor-Selektor vorgesehen sein, der z.B. Nullvektoren für eine Dreiphasenmodulation berechnet, sowie ein PWM-Zählblock, der die aktiven Vektoren und die Nullvektoren empfängt und ein Dreiphasensteuersignal zur Implementierung der Dreiphasenmodulation ausgibt.

In WO 2013/079198 A2 ist ein Verfahren zur Steuerung eines mehrphasigen Umrichters beschrieben, der mittels mehreren Halbbrücken einen dreiphasigen Drehstrommotor versorgt. Die Ansteuerung erfolgt mittels Raumzeigermodulation, wobei zwei Nullvektoren vorgesehen sind, in denen alle Phasen des Umrichters entweder auf das obere oder auf das untere Zwischenkreispotential geklemmt sind. Die Spannungen zwischen den einzelnen Phasen sind dann Null.

Aufgabe der vorliegenden Erfindung ist es, eine weitere Verbesserung der elektromagnetischen Verträglichkeit zu erreichen.

Diese Aufgabe wird durch ein Verfahren gemäß Anspruch 1 erreicht.

Es wird also ein Verfahren zum Betrieb einer elektronisch kommutierten Synchronmaschine bereitgestellt, welche einen Stator mit mindestens zwei, insbesondere drei, Phasenwicklungen und einen mindestens einen Permanentmagnet aufweisenden Rotor umfasst, mit einer Ansteuerschaltung, welche mindestens je zwei einer Phasenwicklungen zugeordnete Schalter aufweist, wobei für jede einzelne Phasenwicklung periodisch ein Aussteuerungsgrad ermittelt wird, anhand dessen die Zeitdauern bestimmt werden, während denen die Phasenwicklung über die zugeordneten Schalter entweder mit einer oberen oder mit einer unteren Versorgungsspannung beaufschlagt wird. Erfindungsgemäß wird die elektronisch kommutierte Synchronmaschine nach einem Verfahren der Raumzeigermodulation angesteuert, bei dem zu Beginn und/oder zu Ende einer Periode für eine Ausschaltzeitdauer Nullvektoren an die Phasenwicklungen angelegt werden, wobei jeweils entweder alle mit der oberen Versorgungsspannung verbundenen Schalter oder alle mit der unteren Versorgungsspannung verbundenen Schalter leiten, und wobei die Wahl des Nullvektors, also ob die leitende Verbindung mit der oberen oder der unteren Versorgungsspannung hergestellt wird, nach Maßgabe der Phasenwicklung mit der betragsmäßig größten Abweichung vom mittleren Aussteuerungsgrad erfolgt, welcher zweckmäßigerweise dem Mittelwert zwischen oberer Versorgungsspannung und unterer Versorgungsspannung entspricht. Anstelle einer direkten Betrachtung des Aussteuerungsgrads kann es dabei vorgesehen sein, eine mit dem Aussteuerungsgrad korrelierte, insbesondere proportionale Größe zu betrachten, wie z.B. einen Strom- oder Spannungswert.

Dadurch, dass eine Phasenwicklung während einer gesamten Periode mit derselben Versorgungsspannung verbunden ist, verringert sich die Anzahl an Schaltvorgängen und somit auch die Amplituden der abgegebenen Störfrequenzen. Dies resultiert in einer verbesserten elektromagnetischen Verträglichkeit. Weiterhin hat das Verfahren den Vorteil, die Schaltzeiten der Halbleiter zu reduzieren, und somit die abgegebene Wärmeleistung zu verringern.

Bevorzugt wird die Ausschaltzeitdauer um einen quasizufälligen Wert geändert, wenn eine vorgegebene Bedingung erfüllt ist.

Dies ermöglicht es insbesondere im Fall eines langsam drehenden oder stillstehenden Motors das abgegebene Frequenzspektrum zu verbreitern und dadurch die gemittelten Amplitudenwerte von Schaltfrequenz und Oberwellen zu verkleinern. Somit kann drehzahlübergreifend, sowohl bei ruhendem als auch bei sich drehendem Motor, die elektromagnetische Verträglichkeit verbessert werden.

Ein ruhender bzw. langsam drehender Motor kann zweckmäßigerweise dadurch erkannt werden, dass eine Drehzahl der elektronisch kommutierten Synchronmaschine ermittelt und mit einem Drehzahlschwellenwert verglichen wird, wobei die vorgegebene Bedingung erfüllt ist und die Ausschaltzeitdauer um einen quasizufälligen Wert geändert wird, wenn die ermittelte Drehzahl kleiner als der Drehzahlschwellenwert ist.

Alternativ können vorzugsweise die Aussteuerungsgrade der einzelnen Phasenwicklungen verglichen werden, wobei ein maximaler Aussteuerungshub als Differenz zwischen dem größten und dem kleinsten Aussteuerungsgrad ermittelt wird, wobei die vorgegebene Bedingung erfüllt ist und die Ausschaltzeitdauer um einen quasizufälligen Wert geändert wird, wenn der Aussteuerungshub einen vorgegebenen Hubschwellenwert unterschreitet.

Die genannten vorgegebenen Bedingungen haben den Vorteil, dass nur Größen betrachtet werden, welche für den Betrieb des Motors meist erforderlich bzw. bekannt sind. Somit kann das Verfahren mit einem geringen zusätzlichen Rechenaufwand und ohne zusätzliche Sensoren realisiert werden.

Es ist vorteilhaft, wenn der quasizufällige Wert mit Hilfe einer mathematischen Funktion berechnet und/oder mit Hilfe einer abgespeicherten Tabelle ermittelt und/oder nach Maßgabe des niedrigstwertigen Bits eines in der Ansteuerschaltung angeordneten oder mit dieser verbundenen Analog-Digitalwandlers gewählt wird. Beispielsweise aus der Kryptografie sind deterministische Funktionen bekannt, die mit geringem Rechenaufwand quasizufällige Werte mit hinreichend langer Periode erzeugen. Prinzipiell kann auch das Rauschen eines in der Ansteuerschaltung vorhandenen Bauelements, beispielsweise eines Analog-Digitalwandlers zur Ermittlung von quasizufälligen bzw. zufälligen Werten genutzt werden.

Besonders in Bezug auf die Wahl des Nullvektors wird zweckmäßigerweise überprüft, ob der Aussteuerungsgrad für die Phasenwicklung mit der betragsmäßig größten Abweichung vom mittleren Aussteuerungsgrad einen oberen Aussteuerungsschwellenwert überschreitet oder einen unteren Aussteuerungsschwellenwert unterschreitet, wobei der obere Aussteuerungsschwellenwert größer als der untere Aussteuerungsschwellenwert ist, wobei die entsprechende Phasenwicklung während einer gesamten Periode mit der oberen Versorgungsspannung verbunden wird, wenn der obere Aussteuerungsgrad überschritten wurde, und mit der unteren Versorgungsspannung verbunden wird, wenn der untere Aussteuerungsgrad unterschritten wurde.

Hierbei ist es vorteilhaft, wenn entweder nur ein Vergleich mit dem oberen Schwellenwert oder nur ein Vergleich mit dem unteren Schwellenwert stattfindet, wobei also entweder nur eine Verbindung der entsprechenden Phasenwicklung mit der oberen Versorgungsspannung oder ausschließlich eine Verbindung der entsprechenden Phasenwicklung mit der unteren Versorgungsspannung erfolgen kann. Somit wird einerseits eine besonders geringe Rechenkapazität benötigt; andererseits kann die Wahl einer "Vorzugsrichtung" je nach in der Ansteuerschaltung verwendetem Leistungshalbleiter vorteilhaft sein.

Die Erfindung betrifft weiterhin eine Ansteuerschaltung für eine elektronisch kommutierten Synchronmaschine, welche einen Stator mit mindestens zwei, insbesondere drei, Phasenwicklungen und einen mindestens einen Permanentmagnet aufweisenden Rotor umfasst, umfassend jeweils zwei einer Phasenwicklung zugeordnete Schalter, die mit einer oberen oder einer unteren Versorgungsspannung verbunden sind. Die Ansteuerschaltung weist erfindungsgemäß eine Recheneinheit auf, insbesondere einen Mikrocontroller, welche die Schalter gemäß einem erfindungsgemäßen Verfahren ansteuert. Der Mikrocontroller umfasst insbesondere einen nichtflüchtigen Speicher, in dem Anweisungen zur Durchführung des Verfahrens abgelegt sind.

Gemäß einer bevorzugten Ausführungsform der Erfindung ist mindestens ein Schalter als Sense-FET realisiert, bei dem an einem zusätzlichen Anschluss des Halbleiterschalters ein zum geschalteten Leistungsstrom proportionaler Meßstrom abgegriffen werden kann, und dass die Recheneinheit mindestens einen Analog-Digitalwandler aufweist, welcher über einen Meßwiderstand den Meßstrom eines verbundenen Sense-FETs ermittelt. Besonders bevorzugt sind alle Schalter als Sense-FETs realisiert, da dies eine Strommessung bei geringen Ansteuerungsgraden vereinfacht.

Ferner betrifft die Erfindung die Verwendung einer erfindungsgemäßen Ansteuerschaltung in einem elektronischen Steuergerät für ein Bremssystem eines Kraftfahrzeugs, wobei die Ansteuerschaltung insbesondere mit einem elektrohydraulischen Aktuator verbunden ist. Beispielsweise bei einem Halten des Fahrzeugs an einer Steigung kann es in einem Bremssystem dazu kommen, dass ein nennenswerter Strom durch den bürstenlosen Motor fließt, während dieser sich nicht dreht. Dann kann durch Wahl des geeigneten Nullvektors und insbesondere eine Änderung der Ausschaltzeitdauer um einen quasizufälligen Wert die Amplitude der abgegebenen Störfrequenzen deutlich vermindern.

Weitere bevorzugte Ausführungsformen ergeben sich aus den Unteransprüchen und der nachfolgenden Beschreibung eines Ausführungsbeispiels an Hand einer Figur.

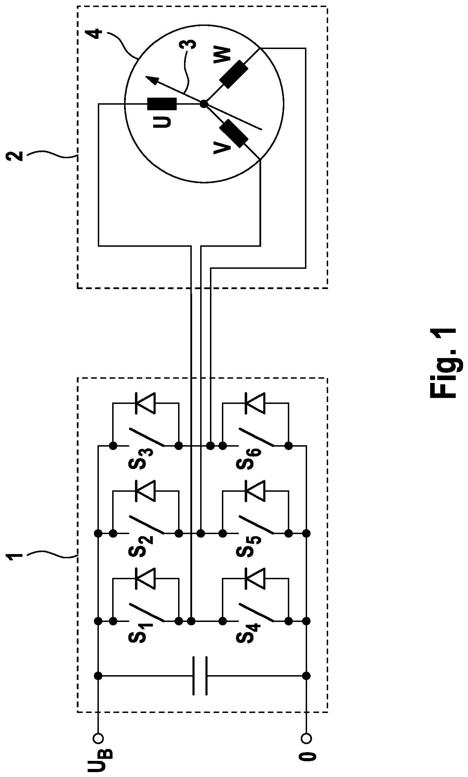

Es zeigt
- Fig. 1: einen bürstenlosen Motor mit Ansteuerschaltung.

In Figur 1 ist eine beispielgemäße elektrische Maschine 2 dargestellt, die über eine Ansteuerschaltung 1 mit Energie versorgt wird. Der Stator der elektrischen Maschine 2 umfasst im gezeigten Beispiel drei Phasenwicklungen U, V und W, welche sternförmig verschaltet sind und über zugeordnete Schalter mit einer oberen Versorgungsspannung U_{B} oder einer unteren Versorgungsspannung 0 (bzw. Masse) verbunden werden können. Der schematisch angedeutete Rotor 3 umfasst mindestens ein Polpaar, welches mittels Permanentmagneten realisiert ist. Nicht gezeigt sind ein Rotorpositionssensor und ein Steuergerät, welches insbesondere einen Mikroprozessor umfasst, der die Schalter ansteuert.

Die Phasenwicklung U kann über Schalter S₁ mit der oberen Versorgungsspannung und über Schalter S₄ mit Masse verbunden werden. Entsprechend sind der Phasenwicklung V die Schalter S₂ und S₅ sowie der Phasenwicklung W die Schalter S₃ und S₆ zugeordnet. Die Schalter können vorzugsweise als Feldeffekttransistoren (FET) realisiert sein und auch eine parallel geschaltete Diode aufweisen, wie dies in der Figur 1 dargestellt ist. Für die Ansteuerung ist es zweckmäßig, wenn jede Phasenwicklung (bzw. die zugehörigen Schalter) ein Strommeßelement aufweist, da dann unabhängig vom Aussteuerungsgrad eine Messung des Stroms durch die einzelnen Phasenwicklungen möglich ist. Dies kann beispielsweise dadurch erfolgen, dass die Schalter als Sense-FETs ausgeführt sind, die an einem zusätzlichen Anschluss einen zum fließenden Schaltstrom proportionalen Meßstrom abgeben, der z.B. über einen Referenzwiderstand und einen Analog-Digitalwandler bestimmt werden kann.

Die Phasenwicklungen werden über eine Raumzeigermodulation mit Strom bzw. Spannung versorgt. Vernachlässigt man Totzeiten, welche wegen des nicht idealen Verhaltens der Schalter erforderlich sind, so ist zu einem beliebigen Zeitpunkt bei Phasenwicklung U entweder Schalter S₁ geöffnet und S₄ geschlossen oder S₁ geschlossen und S₄ geöffnet (bei den anderen Phasenwicklungen gilt dies entsprechend für die zugeordneten Schalter). Den verschiedenen Schaltzuständen der Ansteuerschaltung ist jeweils ein Basisvektor zugeordnet, wobei 6 aktive Basisvektoren einen Stromfluss durch mindestens eine Phasenwicklung bewirken und 2 Schaltzustände Nullvektoren entsprechen. Bei dem ersten Nullvektor sind für jede Phasenwicklung die Schalter zur Verbindung mit der oberen Versorgungsspannung geschlossen, so dass keine Spannung anliegt; bei dem zweiten Nullvektor gilt dies entsprechend für die Schalter zu Masse. Ein beliebiger Spannungsvektor kann bei geeigneter Wahl der Zeitdauern durch die zwei benachbarten aktiven Basisvektoren und einen oder beide Nullvektoren eingestellt werden.

Somit kann zur Ansteuerung der elektrischen Maschine periodisch ein passender Spannungsvektor ermittelt und in einer mittenzentrierten mehrphasigen Pulsweitenmodulation umgesetzt werden. Zweckmäßigerweise beginnt und endet eine Periode mit einem Nullvektor, der für eine Zeitdauer T₀ anliegt. Symmetrisch bezogen auf die Periode wird für eine Zeitdauer T₁ ein erster aktiver Basisvektor angelegt und für eine Zeitdauer T₂ ein zweiter aktiver Basisvektor angelegt. Die Summe der Zeitdauern 2*T₀+2*T₁+2*T₂ muss dabei der Periodendauer entsprechen. Insbesondere bei geringen anzulegenden Spannungen bzw. einem geringen Ansteuerungsgrad kann es auch vorgesehen sein, sowohl zu Beginn und Ende als auch in der Mitte einer Periode einen Nullvektor anzulegen.

Die Wahl des Nullvektors ist hierbei beliebig. Wenn für eine Phasenwicklung mit Ausnahme der Nullvektor-Zeitdauer(n) für die gesamte Periode eine Verbindung mit der oberen Versorgungsspannung anzulegen ist, wird zweckmäßigerweise während dieser Periode nur der erste Nullvektor angelegt. Man kann dies anhand eines Vergleichs des Aussteuerungsgrads mit einem Schwellenwert oder anhand einer Betrachtung von Spannung und Spannungswinkel erkennen.

Bei kleinen Aussteuergraden und langsamer Drehzahl bzw. Stillstand der elektrischen Maschine bilden die Zeitdauern, an denen ein Nullvektor anzulegen ist, einen großen Anteil der Periode. Zweckmäßigerweise werden daher die Einschaltzeiten der einzelnen Basisvektoren bzw. die Einschaltzeiten der einzelnen Phasenwicklungen um einen quasizufälligen Wert angehoben oder abgesenkt. Ein quasizufälliger Wert kann aus einer deterministischen Funktion bestimmt werden, wenn diese eine hinreichende Anzahl von unterschiedlichen Werten liefert, bevor ein Wert sich wiederholt. Da das Steuergerät in vielen Fällen mindestens einen Analog-Digitalwandler aufweist, bietet es sich an das Rauschen dieses Bauteils zu nutzen, indem der zufällige Wert aus dem niedrigstwertigen Bit des Wandlers ermittelt wird. Aufgrund des resultierenden stochastischen Offsets weicht die Schaltfrequenz um (quasi-) zufällige Werte von der Grundfrequenz der Pulsweitenmodulation ab, wodurch das Spektrum der abgegebenen Störungen verbreitert und die gemittelten Amplituden bei einer betrachteten Frequenz verringert.

Das erfindungsgemäße Verfahren verringert die Abgabe von Störungen und kann auch zu einem verringerten Wärmeeintrag führen.

## Patentansprüche

1. Verfahren zum Betrieb einer elektronisch kommutierten Synchronmaschine (2), welche einen Stator mit mindestens zwei, insbesondere drei, Phasenwicklungen (U, V, W) und einen mindestens einen Permanentmagnet aufweisenden Rotor (3) umfasst, mit einer Ansteuerschaltung (1), welche mindestens je zwei einer Phasenwicklungen (U, V, W) zugeordnete Schalter S1-S6) aufweist, wobei für jede einzelne Phasenwicklung (U, V, W) periodisch ein Aussteuerungsgrad ermittelt wird, anhand dessen die Zeitdauern bestimmt werden, während denen die Phasenwicklung (U, V, W) über die zugeordneten Schalter (S1-S6) entweder mit einer oberen (U_{B}) oder mit einer unteren (0) Versorgungsspannung beaufschlagt wird, wobei die elektronisch kommutierte Synchronmaschine (2) nach einem Verfahren der Raumzeigermodulation angesteuert wird, **dadurch gekennzeichnet, dass** bei dem Verfahren der Raumzeigermodulation zu Beginn und/oder zu Ende einer Periode für eine Ausschaltzeitdauer Nullvektoren an die Phasenwicklungen (U, V, W) angelegt werden, wobei jeweils entweder alle mit der oberen Versorgungsspannung (U_{B}) verbundenen Schalter (S1-S3) oder alle mit der unteren Versorgungsspannung (0) verbundenen Schalter (S4-S6) leiten, und dass die Wahl des Nullvektors, also ob die leitende Verbindung mit der oberen (U_{B}) oder der unteren (0) Versorgungsspannung hergestellt wird, basierend auf der Phasenwicklung (U, V, W) mit der betragsmäßig größten Abweichung vom mittleren Aussteuerungsgrad erfolgt, wobei der mittlere Aussteuerungsgrad dem Mittelwert zwischen oberer Versorgungsspannung (U_{B}) und unterer Versorgungsspannung (0) entspricht.

2. Verfahren nach Anspruch 1, **dadurch gekennzeichnet, dass** die Ausschaltzeitdauer um einen quasizufälligen Wert geändert wird, wenn eine vorgegebene Bedingung erfüllt ist.

3. Verfahren nach Anspruch 2, **dadurch gekennzeichnet, dass** eine Drehzahl der elektronisch kommutierten Synchronmaschine (2) ermittelt und mit einem Drehzahlschwellenwert verglichen wird, und dass die vorgegebene Bedingung erfüllt ist und die Ausschaltzeitdauer um einen quasizufälligen Wert geändert wird, wenn die ermittelte Drehzahl kleiner als der Drehzahlschwellenwert ist.

4. Verfahren nach Anspruch 2 oder 3, **dadurch gekennzeichnet, dass** die Aussteuerungsgrade der einzelnen Phasenwicklungen (U, V, W) verglichen werden, wobei ein maximaler Aussteuerungshub als Differenz zwischen dem größten und dem kleinsten Aussteuerungsgrad ermittelt wird, und dass die vorgegebene Bedingung erfüllt ist und die Ausschaltzeitdauer um einen quasizufälligen Wert geändert wird, wenn der Aussteuerungshub einen vorgegebenen Hubschwellenwert unterschreitet.

5. Verfahren nach mindestens einem der Ansprüche 2 bis 4, **dadurch gekennzeichnet, dass** der quasizufällige Wert mit Hilfe einer mathematischen Funktion berechnet und/oder mit Hilfe einer abgespeicherten Tabelle ermittelt und/oder nach Maßgabe des niedrigstwertigen Bits eines in der Ansteuerschaltung (1) angeordneten oder mit dieser verbundenen Analog-Digitalwandlers gewählt wird.

6. Verfahren nach mindestens einem der vorhergehenden Ansprüche, **dadurch gekennzeichnet, dass** überprüft wird, ob der Aussteuerungsgrad für die Phasenwicklung (U, V, W) mit der betragsmäßig größten Abweichung vom mittleren Aussteuerungsgrad einen oberen Aussteuerungsschwellenwert überschreitet oder einen unteren Aussteuerungsschwellenwert unterschreitet, wobei der obere Aussteuerungsschwellenwert größer als der untere Aussteuerungsschwellenwert ist, wobei die entsprechende Phasenwicklung (U, V, W) während einer gesamten Periode mit der oberen Versorgungsspannung (U_{B}) verbunden wird, wenn der obere Aussteuerungsgrad überschritten wurde, und mit der unteren Versorgungsspannung (0) verbunden wird, wenn der untere Aussteuerungsgrad unterschritten wurde.

7. Verfahren nach Anspruch 6, **dadurch gekennzeichnet, dass** entweder nur ein Vergleich mit dem oberen Schwellenwert oder nur ein Vergleich mit dem unteren Schwellenwert stattfindet, wobei also entweder nur eine Verbindung der entsprechenden Phasenwicklung (U, V, W) mit der oberen Versorgungsspannung (U_{B}) oder ausschließlich eine Verbindung der entsprechenden Phasenwicklung (U, V, W) mit der unteren Versorgungsspannung (0) erfolgen kann.

8. Ansteuerschaltung (1) für eine elektronisch kommutierten Synchronmaschine (2), welche einen Stator mit mindestens zwei, insbesondere drei, Phasenwicklungen (U, V, W) und einen mindestens einen Permanentmagnet aufweisenden Rotor (3) umfasst, umfassend jeweils zwei einer Phasenwicklung (U, V, W) zugeordnete Schalter (S1-S6), die mit einer oberen (U_{B}) oder einer unteren (0) Versorgungsspannung verbunden sind, **gekennzeichnet durch** eine Recheneinheit, insbesondere einen Mikrocontroller, welche die Schalter (S1-S6) gemäß einem Verfahren nach einem der Ansprüche 1 bis 7 ansteuert.

9. Ansteuerschaltung (1) nach Anspruch 8, **gekennzeichnet dadurch, dass** mindestens ein Schalter (S1-S6) als Sense-FET realisiert ist, bei dem an einem zusätzlichen Anschluss des Halbleiterschalters (S1-S6) ein zum geschalteten Leistungsstrom proportionaler Meßstrom abgegriffen werden kann, und dass die Recheneinheit mindestens einen Analog-Digitalwandler aufweist, welcher über einen Meßwiderstand den Meßstrom eines verbundenen Sense-FETs ermittelt.

10. Verwendung einer Ansteuerschaltung (1) nach Anspruch 7 oder 8 in einem elektronischen Steuergerät für ein Bremssystem eines Kraftfahrzeugs, wobei die Ansteuerschaltung (1) insbesondere mit einem elektrohydraulischen Aktuator verbunden ist.

## Claims

1. Method for operating an electronically commutated synchronous machine (2) that comprises a stator having at least two, in particular three, phase windings (U, V, W) and a rotor (3) that comprises at least one permanent magnet, said machine also comprising a control circuit (1) that comprises at least two switches (S1-S6) that are allocated to a phase winding (U, V, W), wherein a pulse control factor is determined periodically for each individual phase winding (U, V, W) and reference is made to said pulse control factor in order to determine the time periods during which the phase winding (U, V, W) is influenced by way of the allocated switches (S1-S6) either with an upper (U_{B}) or with a lower (0) supply voltage, wherein the electronically commutated synchronous machine (2) is controlled in accordance with a method of space vector modulation, **characterized in that** in the method of space vector modulation at the beginning and/or end of a period zero vectors are applied to the phase windings (U, V, W) for a switch-off time duration, wherein in each case either all the switches (S1-S3) that are connected to the upper supply voltage (U_{B}) or all the switches (S4-S6) that are connected to the lower supply voltage (0) conduct, and that the zero vector is selected, in other words whether the conductive connection is produced to the upper (U_{B}) or the lower (0) supply voltage, based on the phase winding (U, V, W) having the greatest deviation from the mean pulse control factor, wherein the mean pulse control factor corresponds to the mean value between the upper supply voltage (U_{B}) and lower supply voltage (0).

2. Method according to Claim 1, **characterized in that** the switch-off time duration is altered by a pseudo-random value if a predetermined condition is fulfilled.

3. Method according to Claim 2, **characterized in that** a rotational speed of the electronically commutated synchronous machine (2) is determined and is compared with a rotational speed threshold value, and that the predetermined condition is fulfilled and the switch-off time duration is altered by a pseudo-random value if the rotational speed that is determined is smaller than the rotational speed threshold value.

4. Method according to Claim 2 or 3, **characterized in that** the pulse control factors of the individual phase windings (U, V, W) are compared, wherein a maximal pulse control deviation is determined as the difference between the largest and the smallest pulse control factor, and that the predetermined condition is fulfilled and the switch-off period is altered by a pseudo-random value if the pulse control deviation is below a predetermined deviation threshold value.

5. Method according to at least one of Claims 2 to 4, **characterized in that** the pseudo-random value is calculated with the aid of a mathematic function and/or is determined with the aid of a stored table and/or in accordance with the lowest value bit of an analog-digital converter that is arranged in the pulse control circuit (1) or is connected to said circuit.

6. Method according to at least one of the preceding claims, **characterized in that** a check is performed as to whether the pulse control factor for the phase winding (U, V, W) having the greatest deviation from the mean pulse control factor exceeds an upper pulse control threshold value or is below a lower pulse control threshold value, wherein the upper pulse control threshold value is greater than the lower pulse control threshold value, wherein the corresponding phase winding (U, V, W) is connected during an entire period to the upper supply voltage (U_{B}) if the upper control factor has been exceeded, and is connected to the lower supply voltage (0) if the pulse control factor is below the lower control factor.

7. Method according to Claim 6, **characterized in that** either only one comparison between the upper threshold value or only one comparison with the lower threshold value is performed, wherein in other words either only one connection of the corresponding phase winding (U, V, W) to the upper supply voltage (U_{B}) or only one connection of the corresponding phase winding (U, V, W) to the lower supply voltage (0) can occur.

8. Control circuit (1) for an electronically commutated synchronous machine (2) that comprises a stator having at least two, in particular three, phase windings (U, V, W) and a rotor (3) that comprises at least one permanent magnet, said control circuit comprising in each case two switches (S1-S6) that are allocated in each case to a phase winding (U, V, W), said switches being connected to an upper (U_{B}) or a lower (0) supply voltage, **characterized by** means of a computing unit, in particular a microcontroller that controls the switches (S1-S6) in accordance with a method according to any one of Claims 1 to 7.

9. Control circuit (1) according to Claim 8, **characterized in that** at least one switch (S1-S6) is embodied as a Sense-FET in which at an additional connector of the semiconductor switch (S1-S6) it is possible to tap a measuring current that is proportional to the power current that is connected, and that the computing unit comprises at least one analog-digital converter that determines the measuring current of a connected Sense-FET across a measuring resistor.

10. Use of a control circuit (1) according to Claim 7 or 8 in an electronic control device for a brake system of a motor vehicle, wherein the control circuit (1) is in particular connected to an electrohydraulic actuator.

## Revendications

1. Procédé pour faire fonctionner une machine synchrone (2) à commutation électronique, laquelle comporte un stator ayant au moins deux, notamment trois enroulements de phase (U, V, W) et un rotor (3) qui possède au moins un aimant permanent, comprenant un circuit de commande (1) qui possède au moins respectivement deux commutateurs (S1-S6) associés à un enroulement de phase (U, V, W), un degré de modulation étant déterminé périodiquement pour chaque enroulement de phase (U, V, W) individuel, à l'aide duquel sont définies les durées pendant lesquelles l'enroulement de phase (U, V, W) est alimenté, par le biais des commutateurs (S1-S6) associés, soit avec une tension d'alimentation supérieure (U_{B}), soit avec une tension d'alimentation inférieure (0), la machine synchrone (2) à commutation électronique étant commande selon un procédé de modulation du vecteur d'espace, **caractérisé en ce que** lors du procédé de modulation du vecteur d'espace, des vecteurs nuls sont appliqués pendant une durée de mise hors circuit aux enroulements de phase (U, V, W) au début et/ou à la fin d'une période, soit tous les commutateurs (S1-S3) reliés à la tension d'alimentation supérieure (U_{B}), soit tous les commutateurs (S4-S6) reliés à la tension d'alimentation inférieure (0) étant respectivement passants, et **en ce que** la sélection du vecteur nul, c'est-à-dire l'établissement de la liaison conductrice avec la tension d'alimentation supérieure (U_{B}) ou inférieure (0), s'effectuant en se basant sur l'enroulement de phase (U, V, W) ayant la valeur d'écart la plus importante par rapport au degré de modulation moyen, le degré de modulation moyen correspondant à la valeur moyenne entre la tension d'alimentation supérieure (U_{B}) et la tension d'alimentation inférieure (0).

2. Procédé selon la revendication 1, **caractérisé en ce que** la durée de mise hors circuit est modifiée d'une valeur quasi-aléatoire lorsqu'une condition prédéfinie est remplie.

3. Procédé selon la revendication 2, **caractérisé en ce qu'**une vitesse de rotation de la machine synchrone (2) à commutation électronique est déterminée et comparée à une valeur de seuil de vitesse de rotation, et **en ce que** la condition prédéfinie est remplie et la durée de mise hors circuit est modifiée d'une valeur quasi-aléatoire lorsque la vitesse de rotation déterminée est inférieure à la valeur de seuil de vitesse de rotation.

4. Procédé selon la revendication 2 ou 3, **caractérisé en ce que** les degrés de modulation des enroulements de phase (U, V, W) individuels sont comparés, une course de modulation maximale étant déterminée en tant que différence entre le degré de modulation le plus grand et le plus petit, et **en ce que** la condition prédéfinie est remplie et la durée de mise hors circuit est modifiée d'une valeur quasi-aléatoire lorsque la course de modulation devient inférieure à une valeur de seuil de modulation prédéfinie.

5. Procédé selon l'une des revendications 2 à 4, **caractérisé en ce que** la valeur quasi-aléatoire est calculée à l'aide d'une fonction mathématique et/ou déterminée à l'aide d'un tableau mémorisé et/ou sélectionnée d'après l'indication des bits de poids faible d'un convertisseur analogique/numérique disposé dans le circuit de commande (1) ou relié à celui-ci.

6. Procédé selon l'une des revendications précédentes, **caractérisé en ce qu'**un contrôle est effectué afin de vérifier si le degré de modulation pour l'enroulement de phase (U, V, W) ayant la valeur d'écart la plus importante par rapport au degré de modulation moyen franchit vers le haut une valeur de seuil de modulation haute ou franchit vers le bas une valeur de seuil de modulation basse, la valeur de seuil de modulation haute étant supérieure à la valeur de seuil de modulation basse, l'enroulement de phase (U, V, W) correspondant étant relié pendant une période complète à la tension d'alimentation supérieure (U_{B}) si le degré de modulation haut a été franchi vers le haut, et relié à la tension d'alimentation inférieure (0) si le degré de modulation haut a été franchi vers le bas.

7. Procédé selon la revendication 6, **caractérisé en ce que** soit seule une comparaison avec la valeur de seuil haute, soit seule une comparaison avec la valeur de seuil basse a lieu, c'est-à-dire soit une liaison de l'enroulement de phase (U, V, W) correspondant à la tension d'alimentation supérieure (U_{B}), soit exclusivement une liaison de l'enroulement de phase (U, V, W) correspondant à la tension d'alimentation inférieure (0) pouvant avoir lieu.

8. Circuit de commande (1) pour une machine synchrone (2) à commutation électronique, laquelle comporte un stator ayant au moins deux, notamment trois enroulements de phase (U, V, W) et un rotor (3) qui possède au moins un aimant permanent, comportant au moins respectivement deux commutateurs (S1-S6) associés à un enroulement de phase (U, V, W), lesquels sont reliés à une tension d'alimentation supérieure (U_{B}) ou une inférieure (0), **caractérisé par** une unité de calcul, notamment un contrôleur, qui commande les commutateurs (S1-S6) conformément à un procédé selon l'une des revendications 1 à 7.

9. Circuit de commande (1) selon la revendication 8, **caractérisé en ce qu'**au moins un commutateur (S1-S6) est réalisé sous la forme d'un SenseFET, avec lequel un courant de mesure proportionnel au courant de puissance commuté peut être prélevé sur une borne supplémentaire du commutateur à semiconducteur (S1-S6), et **en ce que** l'unité de calcul possède au moins un convertisseur analogique/numérique qui détermine le courant de mesure d'un SenseFET connecté par le biais d'une résistance de mesure.

10. Utilisation d'un circuit de commande (1) selon la revendication 7 ou 8 dans un contrôleur électronique pour un système de freinage d'un véhicule automobile, le circuit de commande (1) étant notamment relié à un actionneur électrohydraulique.
